# EUROPEAN PATENT SPECIFICATION

(11) **EP 1 488 152 B1**
(45) Date of publication and mention of the grant of the patent: **11.10.2006**
(21) Application number: 03712340.3
(22) Date of filing: 12.03.2003
(51) Int. Cl.: F16L 5/10

(54) **ADJUSTABLE INSERT FOR A DUCT OR BULKHEAD OPENING**
EINSTELLBARER EINSATZ FÜR EINE ROHRLEITUNG ODER ÖFFNUNG IN EINER TRENNWAND
PIECE AJUSTABLE POUR CONDUIT OU OUVERTURE DE CLOISON

(30) Priority: 22.03.2002 GB 0206804
(43) Date of publication of application: 22.12.2004
(73) Proprietor: Tyco Electronics Raychem GmbH, 85521 Ottobrunn (DE)
(72) Inventor: SIMONSOHN, Thilo, 85521 Ottobrunn (DE)
(74) Representative: Gernet, Samuel Andreas
(86) International application number: PCT/GB2003/001061
(87) International publication number: WO 2003/081107

(56) References cited:
- EP-A- 0 152 696
- EP-A- 0 465 725
- US-A- 5 258 578

## Description

This invention relates to an adjustable insert for reducing the cross-section of a duct, bulkhead aperture or the like, and in particular concerns an insert for use with a duct seal of the type comprising a flexible envelope for receiving an expansible or expanding filler material or gas for expanding the envelope in an aperture or a duct to be sealed against the walls of the duct or periphery of the aperture and any other components within the duct or aperture, for example cables or the like.

A seal of the aforementioned type is disclosed in EP-A-0,152,696. In this earlier published document a flexible envelope is arranged to be wrapped on itself in an overlapping configuration for insertion into the duct or aperture to be sealed. The envelope comprises an opening for receiving an expansible or expanding filler material for expanding the envelope against the duct or aperture and any additional components, such as cables, located therein. In one embodiment the envelope is in the form of a closed bag-like structure which is arranged to be wrapped on to itself around the outer periphery of one or more cables or like components located coaxially within the duct. An adhesive or sealant is located on or associated with at least part of the outer surfaces of the envelope so that on expansion the envelope seals the annular region between the cable and the duct.

Duct seals of the type described in EP-A-0,152,696 are capable of sealing ducts with an internal diameter up to 150mm. It is not possible to provide a satisfactory seal using a seal of the aforementioned type when the internal diameter of the duct is greater than 150 mm by enlarging the envelope.

EP-A-0 465 725 describes a cable inlet sealing member of deformable material, preferably of a foamed elastomer. The sealing member comprises a longitudinal opening for insertion of a cable and has a longitudinal slit, preferably of spiral section. The sealing member is of a flexible resilient material and may be unfolded to be applied around a cable.

US-A-5 258 578 describes an end seal for splice closures or for terminals comprising a core portion of a flexible resilient material, which core portion has an outer periphery and openings extending through the core portion, which openings communicate with the outer periphery, and a tail portion which is integral with and extends from the core portion periphery to be wrapped about the core portion and the cables placed in the openings thereof for filling the space between the core portion and the closure end surface.

In accordance with present invention, there is provided an adjustable insert having the features of claim 1 for use in a duct or aperture with a seal of the type including a flexible envelope for receiving an expansible or expanding filler material or gas for expanding the envelope in an aperture or a duct to be sealed.

This insert readily enables the diameter of a duct or aperture to be reduced in the region of the seal so that duct seals of the type described in EP-A-0,152,696 may be used to provide a satisfactory seal in such ducts when used in combination with the insert. The overlapping nature of the insert provides for adjustment of the insert diameter so that the insert may be adjusted for insertion in the aperture or duct to be sealed. The tapered inner and/or outer surface at the overlapping end portion can ensure that a water tight or gas tight seal is achieved in the overlapping region of the insert. The tapered inner surface readily enables the overlapping end portions to form a smooth transition at the overlap so that a more or less continuous outer surface is provided around the insert when in contact with the duct inner surface or the aperture in which it is inserted. By providing a smooth transition in the overlapping region of the two end portions, the inner tapered surface can also prevent deformation of the insert material which may otherwise occur if a non tapered end portion were used resulting in a stepped outer surface. The inner tapered surface can therefore prevent yielding of the insert material in the region of the overlapping end portions and thereby prevent damage to the insert when installed. This is an important feature, particularly if the insert is to be re-used following removal of the seal.

Preferably, the said at least one resilient member is arcuate and adapted for insertion in a substantially circular cross-section duct or aperture. This readily enables the insert to be inserted in the duct or aperture since the diameter of the insert can be adjusted by increasing or decreasing the extent of the overlap against the circumfrential stiffness of the insert. In preferred embodiments the resilient member is resiliently biased radially outwards so that the biasing force acts to force the overlapping end portions apart so that the insert can be positively located in the duct or aperture by reducing the diameter of the insert against the restoring force of the insert for insertion in the duct or aperture and then releasing the restoring force so that the insert expands radially and contacts the duct or aperture periphery in such a way that the restoring force preloads the insert within the duct or aperture.

Preferably, the said overlapping end portions are both tapered in the circumferential direction of the insert. Tapering of both end portions can enable the insert to be correctly inserted in the duct or aperture independently of the overlapping relationship of the end portions, that is to say without consideration for which end portion is overlapped and which contacts the duct or aperture. In preferred embodiments the tapered end portions of each overlapping pair are substantially symmetrical.

In other embodiments, the tapered end portions of each overlapping pair have different circumferential lengths. This can be advantageous when it is desired that the overlapping portions only extend over the tapered surfaces. In embodiments where the tapered surfaces have different lengths the overlapping configuration can be selected in dependence on the degree of overlap when the insert is inserted so that the overlap extends only over one of the tapered inner surfaces.

Preferably, the radially inner surface of each tapered end portion has an radius of curvature less than the radius of curvature of the respective inner surface of the remaining part of the said arcuate member. This readily provides a taper having a relatively smooth transition between the tapered surface and the inner surface of the insert.

In preferred embodiments the radially outer surface of each tapered end portion has a radius of curvature substantially the same as the radius of curvature of the respective outer surface of the remaining part of the said arcuate member such that the said outer surface is substantiality continuous. This can enhance the above mentioned advantages with respect to sealing at the beginning of the overlap on the outer surface of the insert.

Each end portion may comprise an edge at the circumferential extremity of the end portion and wherein the edge is either substantially straight for overlapping engagement with an adjacent end portion or comprises at least one tongue and groove arrangement for interlocking overlapping engagement with an adjacent end portion. Where the edge is substantially straight there is no effective limit on the extent of the overlap as there is with the tongue and groove arrangement where the extent of the overlap is limited by the dimensions of the tongue and grooves in the circumferential direction of the overlap.

In preferred embodiments, each tapered end portion defines a circumferentially extending tongue protruding from the respective ends of the resilient member. The tongues can ensure correct alignment of the overlapping portions with respect to one another immediately on reduction of the diameter of the insert as the tongue portions begin to overlap. This can be advantageous when further interlocking features are provided on one or both sides of the tongue.

The insert may be made of a single material. The material may be an elastomer including, for example, EPDM, silicone or natural rubber. In other embodiments the insert material may be a thermoplastic elastomer. The insert may comprise two or more layers of different materials or the same material having different stiffness or hardness properties, for example. The insert may comprise an inner layer and an outer layer with the inner layer having a stiffness greater than the outer layer.

In other embodiments the insert may comprise an inner layer, an outer layer and an intermediate layer, with the intermediate layer having a stiffness greater than the inner and outer layers. Alternatively the inner and outer layers may have the same stiffness. In one embodiment the intermediate layer may comprise a reinforcement member imbedded within a softer material comprising the inner and outer layers. The reinforcement member may be a metal reinforcement which may be in the form of a spring ring. Alternatively the reinforcement may be provided by an elastomeric material having a hardness greater than that of the inner and outer layers.

The insert may comprise a foam or foam like material. Preferably the foaming rate of such material is relatively low so that it is not overly compressible. It is preferred that the material of the insert or at least the material of the inner and outer layers has a hardness between Shore A20 and A80.

Preferably the insert is a single one-piece integral construction which is capable of being wrapped around upon itself. In other embodiments the insert may comprise two or more resilient members which provide for respective overlapping inter- engagement. For example, the insert may comprise a pair of generally C-shaped resilient members which inter engage to form two overlapping regions along the arms of the C's. The invention also contemplates embodiments in which three or four or more resilient members are provided. In preferred embodiments, the said overlapping portions are configured to provide an overlap of at least 10 degrees. An overlap of 10 degrees is suitable for inserts where the degree of diameter adjustment required for the insert is relatively small. In other embodiments, the overlapping portions are configured to provide an overlap up to 360°, or in other embodiments significantly greater than 360° or even multiples of 360° so that the insert can be wrapped around upon itself. Embodiments where the insert can be wrapped around itself by at least 360° the cross-section and second moment of area of the insert can be reduced to provide a more resilient and flexible insert. In preferred embodiments the wrapped insert is substantially cylindrical, and preferably circular cylindrical.

Preferably the insert further comprises sealing means on the outer and/or inner surfaces thereof. The sealing means may comprise a sealant material, for example an adhesive or mastic sealant, applied to the inner or outer surfaces or both. Alternatively the sealing means may comprise at least one sealing member upstanding on the inner and/or outer surfaces of the insert. The sealing member or members may be in the form of one or more upstanding ribs which extend circumferentially around the inner and/or outer surface of the insert. In one embodiment the sealing members are intregal with the insert. In other embodiments the sealing members are attachably/detachably mounted on the insert for example, by means of a snap fit inter engagement, or mounted with an adhesive.

The insert may be provided with increased surface roughness on at least part of the inner and/or outer surfaces to increase the co-efficient of friction between the insert and duct/aperture or other components when inserted.

In preferred embodiments, at least one pair of interlocking engagement means is/are provided on the inner and outer surfaces of the insert for interlocking of the said overlapping portions to resist sideways slippage thereof during circumferential compression or expansion of the insert. In use this can resist sideways slippage due to externally applied pressure for example pressurised water at 0.3 bar. Preferably the insert has circumferential grooves on the outside and ribs on the inside surfaces which fit into one another when the insert is in an overlapping configuration to provide a geometrical interlocking of the overlapping ends of the insert. Preferably, the grooves and ribs are adapted to enable two or more inserts to be fitted together concentrically in interlocking engagement with the ribs of the outer insert interlocking with the grooves in outer surface of the inner insert. Another option is a side by side interlocking axial configuration. In preferred embodiments the interlocking engagement comprises at least one inter locking circumferential tongue and groove arrangement on the respective inner and outer surfaces of the insert. Preferably, the said insert further comprises a flange at one or both axial end(s) of the said insert. The provision of a flange at one or both sides of the insert readily enables the insert to be manually handled by the installer when the insert is being installed in a duct or aperture for use.

Various embodiments will now be more particularly described by way of example only with reference to the accompanying drawings, in which;
Figure 1 is a perspective view of an insert for use in a duct or aperture according to an embodiment of the present invention;
Figure 2 is a perspective view of the insert of Figure 1 but with the insert inverted with respect to the view of Figure 1;
Figure 3 is an enlarged view of the end portions of the insert shown in Figures 1 and 2;
Figure 4 is a side elevation of the insert of Figures 1-3;
Figures 5a and 5b are schematic cross sectional views of the insert of Figure 1, before and after insertion in a duct or aperture;
Figures 6a and 6b are schematic cross sectional views of an insert according to a second embodiment of the invention showing the insert before and after insertion in a duct or aperture as in Figures 5a and 5b;
Figures 7a and 7b show a schematic cross-sectional view of an insert according to a third embodiment of the invention before and after the insert has been inserted in a duct or aperture;
Figure 8 is a side view of an insert according to a further embodiment of the invention;
Figure 9 is a side cross-sectional view of an insert according to a yet further embodiment of the invention;
Figure 10 is a cross-sectional side view of an insert according to another embodiment of the invention;
Figure 11 is a perspective view of an insert according to a further embodiment of the invention;
Figure 12 is a cross-sectional view of an insert according to a yet further embodiment of the invention, positioned within an aperture termed in a wall;
Figures 13a and 13b are schematic cross sectional views of an insert according to a further embodiment of the invention showing the insert before and after insertion in a duct or aperture; and,
Figures 14a and 14b are schematic cross sectional views of an insert according to a further aspect of the invention showing the insert before and after insertion in a duct or aperture as in Figures 13a and 13b.

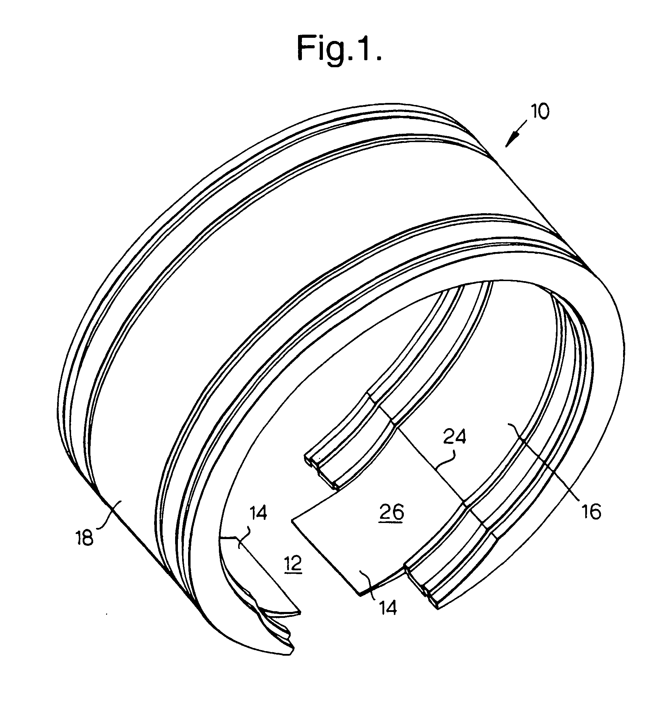

Referring to Figure 1, an adjustable insert for use in a duct or aperture is generally indicated at 10. The insert is for use with a seal of the type described in EP-A-0,152,696 including a flexible envelope for receiving an expansible or expanding filler material or gas for expanding the envelope in an aperture or duet to be sealed. The insert of the present invention is suitable for insertion in ducts or apertures to be sealed using a seal of the aforementioned type where the duct or aperture to be sealed has a diameter or cross section greater than that which the flexible envelope is capable of sealing. The insert of the present invention and of Figure 1 in particular is suitable for use in ducts or apertures having internal diameters greater than 150mm and preferably 210mm or greater although there is no particular limit on the range of ducts the insert may be used to seal. The wall thickness of the insert, that is to say the dimension in the radial direction, is preferably in the range of 15mm to 30mm. In this way an insert having a wall thickness of 25mm is capable of reducing a duct having an internal diameter of 200mm to 150mm on insertion of the insert in the duct. Similarly, and a preferred option, two concentric having a wall thickness of 5 to 30mm can be used for sealing ducts up to 210mm in diameter.

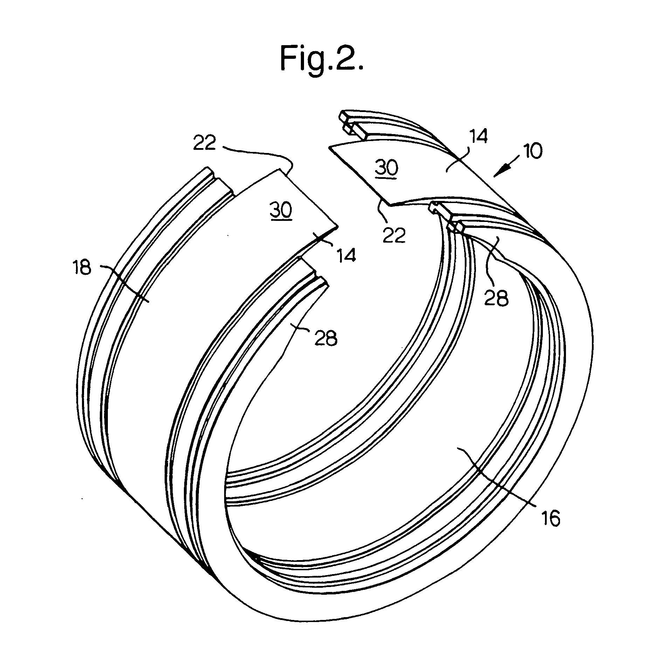

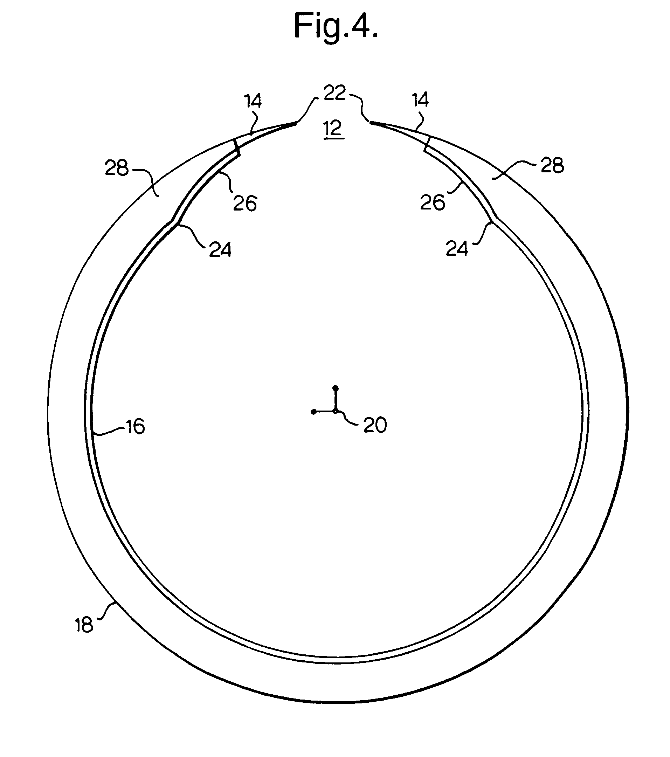

As shown in Figures 1 to 4 the insert 10 has a generally cylindrical configuration. The insert is in the form of a non-continuous hoop in the sense that a circumferential gap 12 of a few degrees exists between two opposing circumferential ends 14 of the cylindrical insert. As can be best seen in Figure 4, the insert has a constant diameter and thickness over the major part of its circumference between the respective end portions 14, with the inner and outer surfaces 16 and 18 being concentric with respect to one another about the axis of the cylinder 20. The radius of the outer surface 18 is constant over the entire surface between respective edges 22 at the end of the end portions 14. The radius of the inner surface 16 is constant over the major part of the circumference of the insert, for example over 300°, between respective edges 24 where the radius of the inner surface progressively increases towards the tips 22 to define respective tapered inner surfaces 26 therebetween. The tapered inner surfaces have a radius of curvature which is slightly less than the radius of curvature of the remaining part of the inner surface 16.

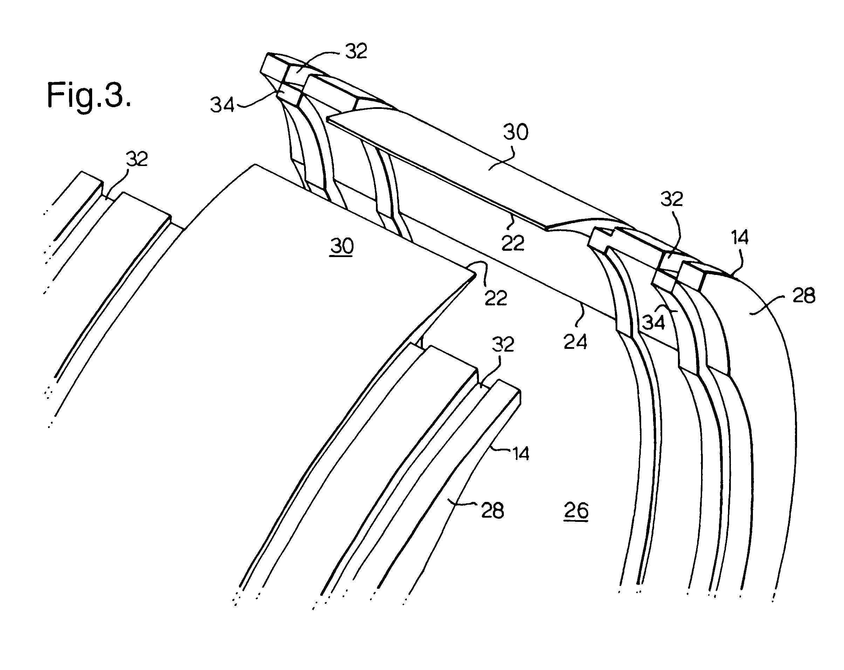

As can best be seen in Figure 3, the end portions 14 between the edge 24 and tip 22 comprise a first part 28 nearest the edge 24 and a second part 30 in the form of a circumferentially extending tongue. The regions on both sides of the tongues are provided with an interlocking tongue and groove arrangement 32, 34 in which a circumferential groove 32 is provided on the outer surface circumferentially around the inner surface 16. As will be more fully described in the description that is to follow, the ribs 34 locate in the respective grooves 32 when the diameter of the insert is reduced by overlapping engagement of the end portions 14. In the insert of Figures 1 to 4 a further interlocking tongue and groove arrangement 32, 34, stands around the circumference of the insert on both sides of the tongue portion 30.

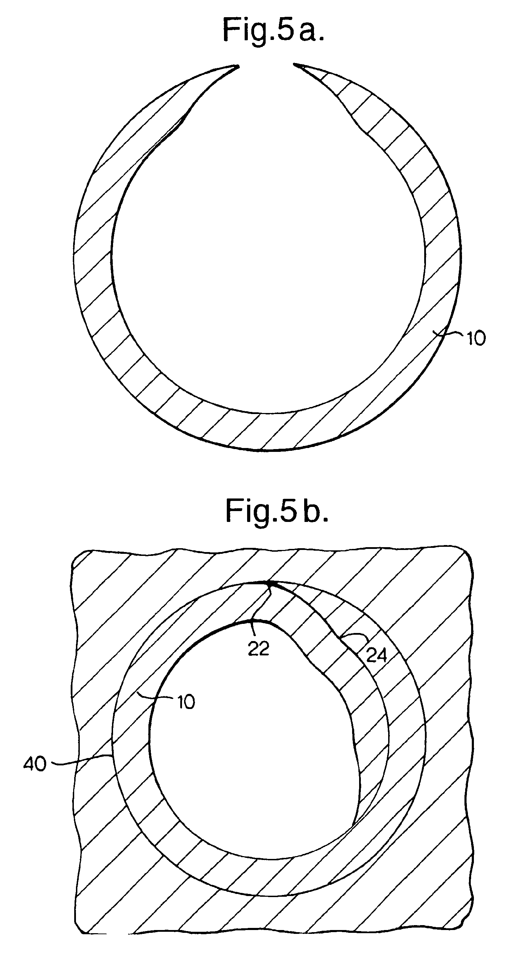

Referring now to Figures 5a and 5b, in Figure 5a an insert of the type described with reference to Figures 1 to 4 is shown schematically in its uncompressed configuration. In Figure 5b the insert has been positioned within an aperture 40 which may be a duct aperture or other opening by forcing the end portions into overlapping engagement with each other and adjacent parts thereof to reduce the diameter of the insert for insertion within the aperture 40. The insert is reduced to a diameter less than that of the aperture 40 for insertion and then released so that the restoring force of the deformed or compressed insert causes the insert to expand and engage the periphery of the aperture 40. As can be seen in Figure 5b the edge 22 of the overlapping end portion contacts the periphery of the aperture and the tapered inner surface between the tip and the edge 24 provides a gentle transition for the overlapped part of the insert such that the insert has a substantially continuous outer surface with only a slight discontinuity along the join line at the edge 22. The resilient nature of the insert provides positive engagement of the insert within the aperture whereas the resilience of the material of the insert enables the overlapping and overlapped parts to conform to the required overlapping configuration without discontinuity of the outer surface.

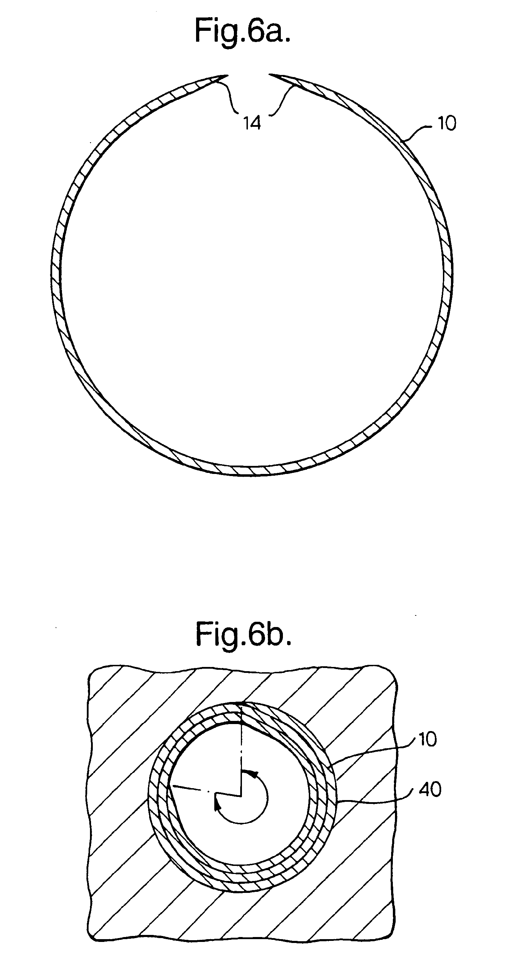

Referring now to Figures 6a and 6b which show an insert having a relatively thin wall cross section (radial thickness) suitable for forming a spiral overlapping insert having multiple turns when inserted in an aperture as shown in Figure 6b. In this embodiment the overlapping angle is approximately 900 degrees and in this respect the diameter of the unwound insert is significantly greater than that of the aperture into which it is to be inserted.

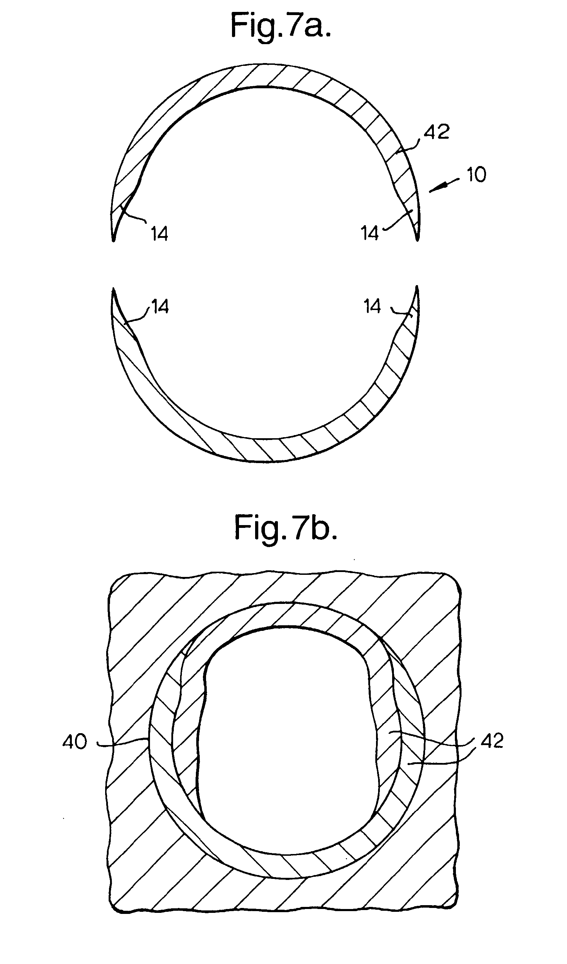

Referring to Figures 7a and 7b, in u further embodiment of the invention the insert comprises a pair of C-shaped resilient members 42 which are similar to the insert of Figures 1 to 4 but in their un-compressed configuration define an are of approximately 180 degrees. In Figure 7b the resilient arcuate C-shaped members 42 are positioned one inside the other so that the respective end portions are held in overlapping engagement by the outward resilience of the compressed and deformed members 42.

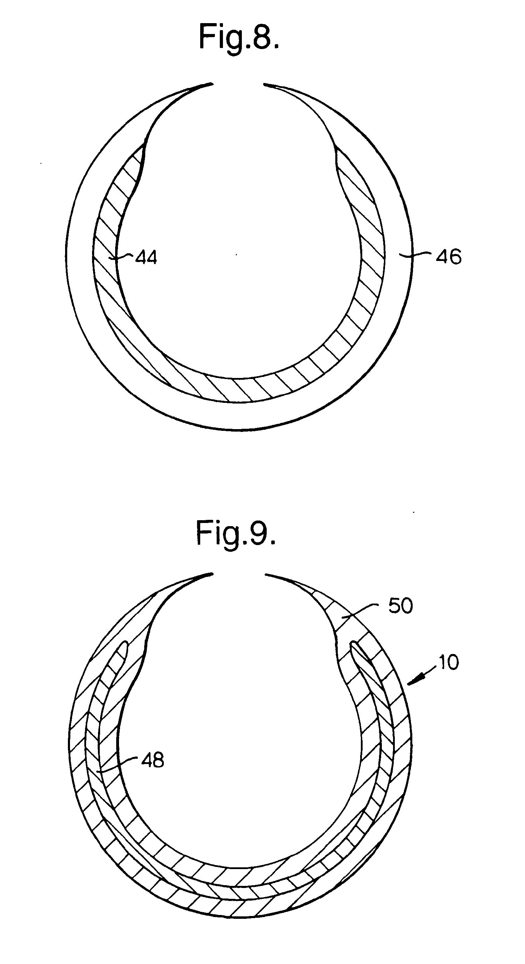

Referring now to Figure 8, the inserts according to the embodiments of Figures 1 to 7 may comprise a single material or be constructed in accordance with embodiment of Figure 8 in which the insert comprises an inner layer 44 and an outer layer 46, wherein the inner layer comprises a relatively stiff and/or hard material and the outer layer comprises a relatively soft material.

In the embodiment of Figure 9 the insert comprises an embedded layer of reinforcement material 48 which can be a metal ring or spring or like component or a relatively stiff or hard material.

The reinforcement 48 is embedded in a softer material 50, for example a relatively soft elastomer.

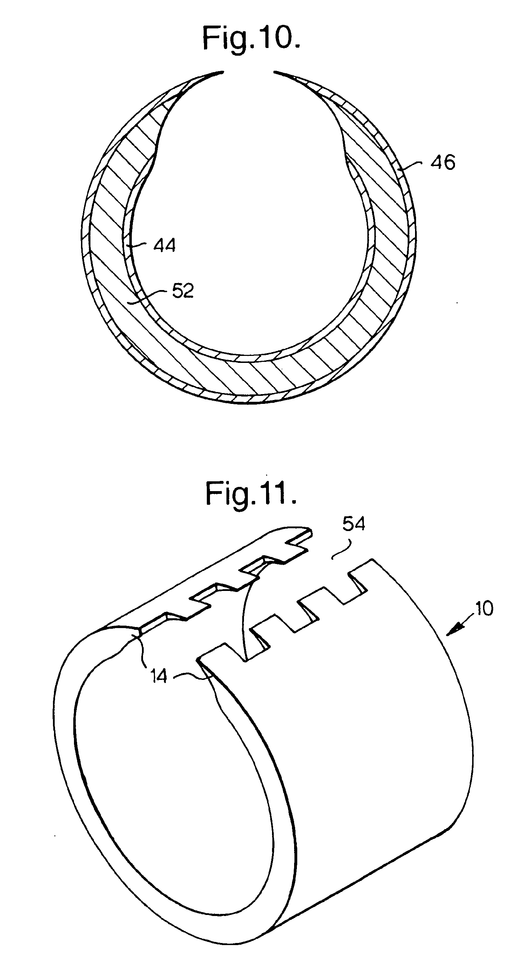

In the embodiment of Figure 10, the insert comprises an inner layer 44, an outer layer 46 and an intermediate layer 52. The intermediate layer 52 has a stiffness greater than the inner and outer layers which may comprise a soft elastomer with the intermediate layer comprising a hard elastomer.

In the embodiment of Figure 11 the straight edge 22 at the end of the end portions 14 is castellated to provide a series of interlocking tongue and grooves 54 along the length of the end portions 14. In this embodiment the range of adjustment of the diameter of the insert is limited by the circumferential depth dimension of the tongue and grooves.

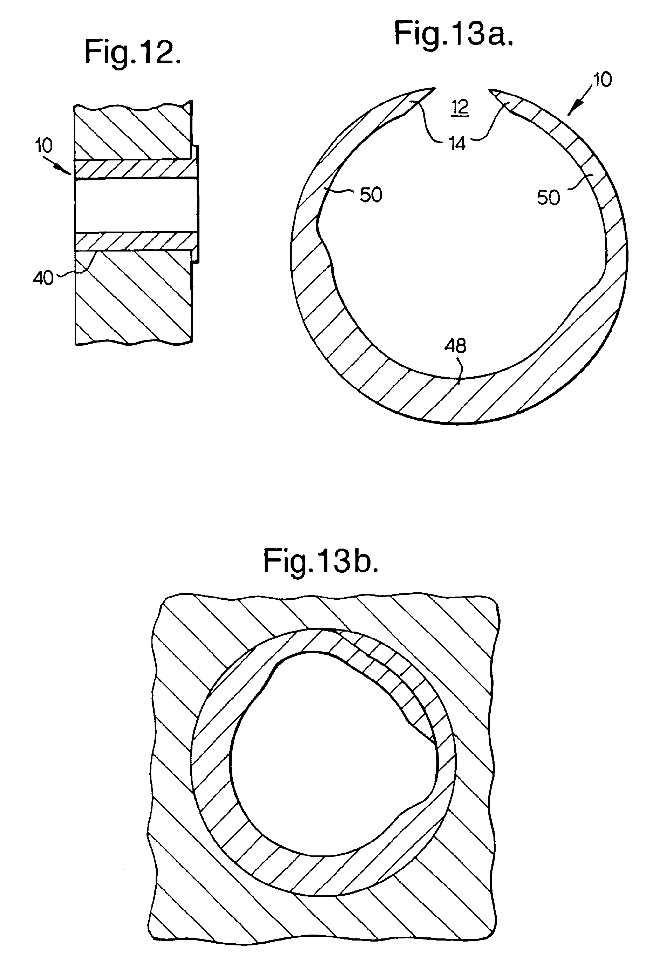

In the embodiment of Figure 12, an insert 10 of the aforementioned types as described with reference to Figures 1 to 11 is provided with a radial flange at one or both axial ends thereof, only one being shown in the drawing of Figure 12. The radial flange is provided to more readily enable the insert to be manually manipulated for insertion in the aperture 40.

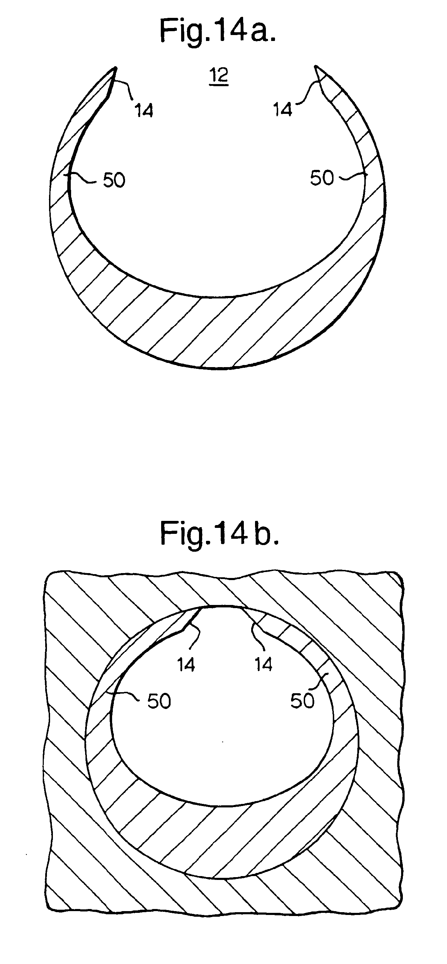

In the embodiment of Figures 13a and 13b, an insert 10 differs from the aforementioned embodiments in that the wall thickness in the radial direction of the insert varies along the circumference of the insert. In the example shown in Figure 13a the insert has a generally thicker mid portion 48 which extends approximately 180° on the opposite side of the insert to the gap 12. The tapered end portions 14 are substantially the same as previously described. In this embodiment the insert comprises a pair of intermediate portions 50 having a thickness less than that of the mid portion 48. The intermediate portions extend between the mid portion 48 and the respective end portions 14. As can best be seen in Figure 13b when the insert of Figure 13a is positioned within a circular cross section duct or aperture the end portions 14 and at least part of the intermediate portions 15 overlap so that the overlapping portion is of a similar radial thickness to that of the mid portion 48. In this way it is possible to form a substantially constant thickness lining within the duct or aperture by selecting an insert having appropriate dimensions such that the intermediate portions 15 overlap completely when the insert is inserted. In the example shown in Figure 13b the intermediate portions do not completely overlap and therefore two thinner radial sections are formed on either side of the overlap.

Referring now to Figures 14a and 14b, in a further embodiment of the invention an insert 10 has a generally crescent shape similar to that of a crescent moon in the sense that the radial thickness of the insert gradually increases from the end portions 14 to a mid point equidistance from the respective end portions opposite the gap 12. The cross section of the insert of Figures 14a and 14b is similar to that but not the same as the insert of Figures 13a and 13b in the sense that substantially thinner intermediate portions 50 extend circumferentially from a thicker mid portion 48 towards the respective end portions 14. However, in the arrangement of Figures 14a and 14b the cross sectional radial thickness of the insert varies entirely over the circumference of the crescent shaped insert. This variation in radial thickness provides an eccentric lining around the duct or aperture on insertion of the insert, that is to say on one side of the duct or aperture the insert has a relatively large radial thickness while on the other the insert thickness is relatively thin and is reduced to zero where there is no overlap. The insert of Figures 14a and 14b is preferably dimensioned so that the gap 12 between the respective end portions is not closed on insertion of the insert in the duct or aperture. In this arrangement the insert is compressed to reduce the circumference and radius of the insert for insertion in the duct or aperture to close the gap 12 but not sufficiently to cause the end portions and/or intermediate portions to overlap. In this arrangement the tapered end portions provide a smooth transition from the inner surface of the duct or aperture to the inner surface of the insert so that an envelope or bag type seal of the aforementioned type can be readily accommodated without having to accommodate discontinuities in the lining and duct surface. The various features and materials of the inserts described with reference to Figures 1 to 13 are equally applicable to the embodiment of Figures 14a and 14b where the respective ends do not overlap when inserted but instead maintain a gap 12 there between to form a smooth inner surface comprising the inner surface of the insert and part of the inner surface of the duct or aperture for contact with the envelope of the aforementioned type of seal.

Although the invention has been described with reference to embodiments shown in the accompanying drawings it is to be understood that the invention is not limited to those precise embodiments and that various changes and modifications may be effected without further inventive skill and effort. For example, the insert may have a generally rectangular configuration for use in square or rectangular cross-section ducts or apertures.

## Claims

1. An adjustable insert (10) for use in a duct or aperture (40) with a seal of the type including a flexible envelope for receiving an expansible or expanding filler material or gas for expanding the envelope in an aperture or a duct to be sealed; the said insert (10) comprising: at least one resilient member (10, 42) for insertion between the said aperture (40) or duct and the said envelope, the or each member (10, 42) having a pair of end portions (14) at opposing ends (22) thereof, said end portions (14) having a tapered inner and/or outer surface (26) in the circumferential direction of the insert (10) for overlapping engagement with an adjacent end portion (14) of the resilient member (10) or a neighbouring member (42), whereby in the overlapping engagement a substantially continuous outer surface around the insert (10) is provided,
**characterised in that**
the tapered end portions (14) of each overlapping pair are substantially symmetrical and the resilient members (10, 42) are resiliently biased radially outwards so that the biasing force acts to force the overlapping end portions (14) apart.

2. An insert as claimed in Claim 1 wherein the said at least one resilient member (10) is arcuate and adapted for insertion in a substantially circular cross-section duct or aperture (40).

3. An insert as claimed in any preceding claim, wherein the tapered end portions (14) or each overlapping pair have different circumferential lengths.

4. An insert as claimed in any preceding claim, wherein the radially inner surface (26) of each tapered end portion (14) has an radius of curvature less than the radius of curvature of the respective inner surface (16) of the remaining part of the said arcuate member (10).

5. An insert as claimed in any preceding claim, wherein the radially outer surface (18) of each tapered end portion (14) has a radius of curvature substantially the same as the radius of curvature of the respective outer surface (18) of the remaining part of the said arcuate member (10) such that the said outer surface (18) is substantiality continuous.

6. An insert as claimed in any preceding claim, wherein each end portion (14) comprises an edge (22) at the circumferential extremity of the said end portion (14) and wherein the said edge (22) is either substantially straight for overlapping engagement with an adjacent end portion (14) or comprises at least one tongue (34) and groove (32) arrangement for interlocking overlapping engagement with an adjacent end portion (14).

7. An insert as claimed in any preceding claim, wherein each tapered end portion (14) defines a circumferentially extending tongue (30) protruding from the resilient member (10).

8. An insert as claimed in any preceding claim which comprises a single material.

9. An insert as claimed in any preceding claim, wherein the said insert (10) comprises a plurality of layers (44, 46, 48, 50, 52) having different material properties.

10. An insert as claimed in Claim 9 wherein the said insert (10) comprises an inner layer (44) and an outer layer (46) and the inner layer (44) has a stiffness and/or hardness greater than the outer layer (46).

11. An insert as claimed in Claim 10 wherein the said insert (10) comprises an inner layer (44), an outer layer (46) and an intermediate layer (52), and wherein the said intermediate layer (52) has a stiffness and/or hardness greater than the said inner and outer layers (44, 46).

12. An insert as claimed in Claim 11 wherein the inner and outer layers (44, 46) have the same stiffness.

13. An insert as claimed in Claim 11 or 12 wherein the intermediate layer comprises a reinforcement member (48) embedded within a softer material (50) comprising the inner and outer layers (44, 46).

14. An insert as claimed in Claim 13 wherein the said reinforcement member (48) comprises a metal or hard elastomeric material.

15. An insert as claimed in any preceding claim wherein the insert (10) comprises an elastomeric material.

16. An insert as claimed in Claim 15 wherein the said elastomer comprises EPDM, Silicone or natural rubber.

17. An insert as claimed in Claim 15 wherein the said elastomer is a thermoplastic elastomer.

18. An insert as claimed in any preceding claim wherein the insert (10) comprises a foam or foam like material.

19. An insert as claimed in any preceding claim comprising a material having a hardness between Shore A 20 and 80.

20. An insert as claimed in Claim 9 wherein the said insert (10) comprises at least two layers (44, 46, 48, 50, 52) of the same material having different hardness properties.

21. An insert as claimed in any preceding claim, wherein the insert (10) is of one-piece integral construction.

22. An insert as claimed in any preceding claim, wherein the insert comprises two or more resilient members (42) for respective overlapping inter-engagement.

23. An insert as claimed in any preceding claim wherein the said overlapping portions (14) are configured to provide an overlap of at least 10 degrees.

24. An insert as claimed in Claim 23 wherein the said overlapping portions (14) are configured to provide an overlap of 360 degrees or less.

25. An insert as claimed in Claim 23 wherein the said overlapping portions (14) are configured to provide an overlap of 900 degrees or less,

26. An insert as claimed in any preceding claim which is substantially cylindrical.

27. An insert as claimed in any preceding claim further comprising sealing means on the outer and/or inner surfaces (16, 18) thereof.

28. An insert as claimed in Claim 27 wherein the said sealing means comprises a sealant material applied to the said surface(s) (16, 18) or at least one sealing member upstanding on the said surface(s) (16, 18).

29. An insert as claimed in Claim 28 wherein the said sealing member(s) are integral with the insert (10) or are attachable/detachable to the said insert (10).

30. An insert as claimed in any preceding claim wherein said insert (10) comprises increased surface roughness on at least part of the outer and/or inner surface (16, 18) to increase the co-efficient of friction.

31. An insert as claimed in any preceding claim wherein at least one pair of interlocking engagement means (32. 34. 54) is/are provided on the inner and outer surfaces (16, 18) of the insert (10) for interlocking of the said overlapping portions (14) during compression or expansion of the insert (10).

32. An insert as claimed in Claim 31 wherein the said interlocking engagement means (32, 34) comprise at least one interlocking circumferential tongue and groove (54) arrangement on the respective inner and outer surfaces (16, 18) of the said insert (10).

33. An insert as claimed in any preceding claim wherein the said insert (10) further comprises a flange at one or both axial end(s) of the said insert (10).

## Patentansprüche

1. Einstellbarer Einsatz (10) für die Verwendung in einer Rohrleitung oder Öffnung (40) mit einer Dichtung des Typs mit einer flexiblen Hülle zur Aufnahme eines ausdehnbaren oder sich ausdehnenden Füllmaterials oder Gases zum Ausdehnen der Hülle in einer abzudichtenden Öffnung oder Rohrleitung, wobei der Einsatz (10) Folgendes umfasst: wenigstens ein elastisches Element (10, 42) zum Einsetzen zwischen der Öffnung (40) oder Rohrleitung und der Hülle, wobei das oder jedes Element (10, 42) ein Paar Endabschnitte (14) an gegenüberliegenden Enden (22) davon hat, wobei die Endabschnitte (14) eine sich konisch verjüngende Innen- und/oder Außenfläche (26) in der Umfangsrichtung des Einsatzes (10) für einen Überlappungseingriff mit einem benachbarten Endabschnitt (14) des elastischen Elementes (10) oder einem Nachbarelement (42) haben, so dass in dem Überlappungseingriff eine im Wesentlichen kontinuierliche Außenfläche um den Einsatz (10) entsteht,
**dadurch gekennzeichnet, dass**
die sich konisch verjüngenden Endabschnitte (14) jedes überlappenden Paares im Wesentlichen symmetrisch sind und die elastischen Elemente (10, 42) elastisch radial nach außen vorgespannt sind, so dass die Vorspannkraft die Wirkung hat, die überlappenden Endabschnitte (14) auseinander zu drücken.

2. Einsatz nach Anspruch 1, wobei das wenigstens eine elastische Element (10) bogenförmig und zum Einsetzen in eine Rohrleitung oder Öffnung (40) mit einem im Wesentlichen kreisförmigen Querschnitt gestaltet ist.

3. Einsatz nach einem der vorherigen Ansprüche, wobei die sich konisch verjüngenden Endabschnitte (14) jedes überlappenden Paares unterschiedliche Umfangslängen haben.

4. Einsatz nach einem der vorherigen Ansprüche, wobei die radial innere Fläche (26) jedes sich konisch verjüngenden Endabschnitts (14) einen Krümmungsradius hat, der kleiner ist als der Krümmungsradius der jeweiligen Innenfläche (16) des restlichen Teils des bogenförmigen Elementes (10).

5. Einsatz nach einem der vorherigen Ansprüche, wobei die radial äußere Fläche (18) jedes sich konisch verjüngenden Endabschnitts (14) einen Krümmungsradius hat, der im Wesentlichen derselbe ist wie der Krümmungsradius der jeweiligen Außenfläche (18) des übrigen Teils des bogenförmigen Elementes (10), so dass die Außenfläche (18) im Wesentlichen kontinuierlich ist.

6. Einsatz nach einem der vorherigen Ansprüche, wobei jeder Endabschnitt (14) einen Rand (22) am Umfangsende des Endabschnitts (14) hat und wobei der Rand (22) entweder im Wesentlichen gerade für einen Überlappungseingriff mit einem benachbarten Endabschnitt (14) ist oder wenigstens eine Anordnung bestehend aus Feder (34) und Nut (32) für einen verriegelnden Überlappungseingriff mit einem benachbarten Endabschnitt (14) umfasst.

7. Einsatz nach einem der vorherigen Ansprüche, wobei jeder sich konisch verjüngende Endabschnitt (14) eine umfangsmäßig verlaufende Feder (30) definiert, die von dem elastischen Element (10) vorsteht.

8. Einsatz nach einem der vorherigen Ansprüche, der ein einzelnes Material umfasst.

9. Einsatz nach einem der vorherigen Ansprüche, wobei der Einsatz (10) mehrere Lagen (44, 46, 48, 50, 52) mit unterschiedlichen Materialeigenschaften umfasst.

10. Einsatz nach Anspruch 9, wobei der Einsatz (10) eine Innenlage (44) und eine Außenlage (46) umfasst und die Innenlage (44) eine Steifigkeit und/oder Härte hat, die größer ist als die der Außenlage (46).

11. Einsatz nach Anspruch 10, wobei der Einsatz (10) eine Innenlage (44), eine Außenlage (46) und eine Zwischenlage (52) umfasst und wobei die Zwischenlage (52) eine Steifigkeit und/oder Härte hat, die größer ist als die der Innen- und der Außenlage (44, 46).

12. Einsatz nach Anspruch 11, wobei die Innen- und die Außenlage (44, 46) dieselbe Steifigkeit haben.

13. Einsatz nach Anspruch 11 oder 12, wobei die Zwischenlage ein Verstärkungselement (48) umfasst, das in einem weicheren Material (50) eingebettet ist, das die Innen- und die Außenlage (44, 46) umfasst.

14. Einsatz nach Anspruch 13, wobei das Verstärkungselement (48) ein Metall oder ein hartes Elastomermaterial umfasst.

15. Einsatz nach einem der vorherigen Ansprüche, wobei der Einsatz (10) ein elastomeres Material umfasst.

16. Einsatz nach Anspruch 15, wobei das Elastomer EPDM, Silikon oder Naturkautschuk umfasst.

17. Einsatz nach Anspruch 15, wobei das Elastomer ein Thermoplastelastomer ist.

18. Einsatz nach einem der vorherigen Ansprüche, wobei der Einsatz (10) einen Schaumstoff oder ein schaumstoffähnliches Material umfasst.

19. Einsatz nach einem der vorherigen Ansprüche, der ein Material mit einer Shore A Härte zwischen 20 und 80 umfasst.

20. Einsatz nach Anspruch 9, wobei der Einsatz (10) wenigstens zwei Lagen (44, 46, 48, 50, 52) aus demselben Material mit unterschiedlichen Härteeigenschaften umfasst.

21. Einsatz nach einem der vorherigen Ansprüche, wobei der Einsatz (10) eine einstückige Integralkonstruktion ist.

22. Einsatz nach einem der vorherigen Ansprüche, wobei der Einsatz zwei oder mehr elastische Elemente (42) für ein jeweiliges überlappendes Ineinandergreifen umfasst.

23. Einsatz nach einem der vorherigen Ansprüche, wobei die überlappenden Abschnitte (14) so konfiguriert sind, dass eine Überlappung von wenigstens 10 Grad entsteht.

24. Einsatz nach Anspruch 23, wobei die überlappenden Abschnitte (14) so konfiguriert sind, dass eine Überlappung von 360 Grad oder weniger entsteht.

25. Einsatz nach Anspruch 23, wobei die überlappenden Abschnitte (14) so konfiguriert sind, dass eine Überlappung von 900 Grad oder weniger entsteht.

26. Einsatz nach einem der vorherigen Ansprüche, der im Wesentlichen zylindrisch ist.

27. Einsatz nach einem der vorherigen Ansprüche, der ferner Dichtungsmittel auf seiner Außen- und/oder Innenfläche (16, 18) umfasst.

28. Einsatz nach Anspruch 27, wobei das Dichtungsmittel ein Dichtungsmaterial umfasst, das auf die Oberfläche(n) (16, 18) oder auf wenigstens ein Dichtungselement aufgebracht wird, das von der/den Oberfläche(n) (16, 18) weg steht.

29. Einsatz nach Anspruch 28, wobei das/die Dichtungselement(e) mit dem Einsatz (10) integriert ist/sind oder an/von dem Einsatz (10) angebracht/abgenommen werden kann/können.

30. Einsatz nach einem der vorherigen Ansprüche, wobei der Einsatz (10) eine zunehmende Oberflächenrauheit auf wenigstens einem Teil der Außen- und/oder Innenfläche (16, 18) umfasst, um den Reibungskoeffizienten zu erhöhen.

31. Einsatz nach einem der vorherigen Ansprüche, wobei wenigstens ein Paar Verriegelungseingriffsmittel (32, 34, 54) an den Innen- und Außenflächen (16, 18) des Einsatzes (10) vorgesehen ist/sind, um die überlappenden Abschnitte (14) beim Kompromieren oder Ausdehnen des Einsatzes (10) zu verriegeln.

32. Einsatz nach Anspruch 31, wobei die Verriegelungseingriffsmittel (32, 34) wenigstens eine Umfangsverriegelungsanordnung aus Feder und Nut (54) an den jeweiligen Innen- und Außenflächen (16, 18) des Einsatzes (10) umfassen.

33. Einsatz nach einem der vorherigen Ansprüche, wobei der Einsatz (10) ferner einen Flansch an einem oder an beiden axialen Ende(n) des Einsatzes (10) umfasst.

## Revendications

1. Insert ajustable (10) destiné à être utilisé dans un conduit ou une ouverture (40), avec un joint du type englobant une enveloppe flexible pour recevoir un matériau de charge ou un gaz dilatable ou à dilatation, pour dilater l'enveloppe dans une ouverture ou un conduit dont l'étanchéité doit être établie; ledit insert (10) comprenant: au moins un élément élastique (10, 42) destiné à être inséré entre ladite ouverture (40) ou le conduit et ladite enveloppe, l'élément ou chaque élément (10, 42) comportant une paire de parties d'extrémité (14) au niveau des extrémités opposées correspondantes (22), lesdites parties d'extrémité (14) comportant une surface interne et/ou externe effilée (26) dans la direction circonférentielle de l'insert (10) en vue d'un engagement par chevauchement dans une partie d'extrémité adjacente (14) de l'élément élastique (10) ou un élément avoisinant (42), l'engagement par chevauchement établissant une surface externe pratiquement continue autour de l'insert (10),
**caractérisé en ce que**
les parties d'extrémité effilées (14) de chaque paire à chevauchement sont pratiquement symétriques et les éléments élastiques (10, 42) sont poussés par élasticité radialement vers l'extérieur, de sorte que la force de poussée entraîne un écartement des parties d'extrémités à chevauchement (14).

2. Insert selon la revendication 1, dans lequel ledit au moins un élément élastique (10) est arqué et destiné à être inséré dans un conduit ou une ouverture (40) à section transversale pratiquement circulaire.

3. Insert selon l'une quelconque des revendications précédentes, dans lequel les parties d'extrémité effilées (14) de chaque paire à chevauchement ont des longueurs circonférentielles différentes.

4. Insert selon l'une quelconque des revendications précédentes, dans lequel la surface radialement interne (26) de chaque partie d'extrémité effilée (14) a un rayon de courbure inférieur au rayon de courbure de la surface interne respective (16) de la partie restante dudit élément arqué (10).

5. Insert selon l'une quelconque des revendications précédentes, dans lequel la surface radialement externe (18) de chaque partie d'extrémité effilée (14) a un rayon de courbure pratiquement égal au rayon de courbure de la surface externe respective (18) de la partie restante dudit élément arqué (10), de sorte que ladite surface externe (18) est pratiquement continue.

6. Insert selon l'une quelconque des revendications précédentes, dans lequel chaque partie d'extrémité (14) comprend un bord (22) au niveau de l'extrémité circonférentielle de ladite partie d'extrémité (14), ledit bord (22) étant pratiquement droit en vue d'un engagement par chevauchement dans une partie d'extrémité adjacente (14) ou comprenant au moins un agencement à languette (34) et rainure (32) en vue d'un engagement à verrouillage mutuel par chevauchement dans une partie d'extrémité adjacente (14).

7. Insert selon l'une quelconque des revendications précédentes, dans lequel chaque partie d'extrémité effilée (14) définit une languette à extension circonférentielle (30) débordant de l'élément élastique (10).

8. Insert selon l'une quelconque des revendications précédentes, composé d'un seul matériau.

9. Insert selon l'une quelconque des revendications précédentes, dans lequel ledit insert (10) comprend plusieurs couches (44, 46, 48, 50, 52) présentant différentes propriétés de matériau.

10. Insert selon la revendication 9, dans lequel ledit insert (10) comprend une couche interne (44) et une couche externe (46), la couche interne (44) ayant une rigidité et/ou une dureté supérieure(s) à celle(s) de la couche externe (46).

11. Insert selon la revendication 10, dans lequel ledit insert (10) comprend une couche interne (44), une couche externe (46) et une couche intermédiaire (52), ladite couche intermédiaire (52) ayant une rigidité et/ou une dureté supérieures à celles desdites couches interne et externe (44, 46).

12. Insert selon la revendication 11, dans lequel les couches interne et externe (44, 46) ont la même rigidité.

13. Insert selon les revendications 11 ou 12, dans lequel la couche intermédiaire comprend un élément de renforcement (48) noyé dans un matériau plus mou (50), composant les couches interne et externe (44, 46).

14. Insert selon la revendication 13, dans lequel ledit élément de renforcement (48) comprend un métal ou un matériau élastomère dur.

15. Insert selon l'une quelconque des revendications précédentes, dans lequel l'insert (10) comprend un matériau élastomère.

16. Insert selon la revendication 15, dans lequel ledit élastomère comprend une membrane EPDM, de la silicone ou un caoutchouc naturel.

17. Insert selon la revendication 15, dans lequel ledit élastomère est un élastomère thermoplastique.

18. Insert selon l'une quelconque des revendications précédentes, dans lequel l'insert (10) comprend une mousse ou un matériau en forme de mousse.

19. Insert selon l'une quelconque des revendications précédentes, comprenant un matériau ayant une dureté Shore A comprise entre 20 et 80.

20. Insert selon la revendication 9, dans lequel ledit insert (10) comprend au moins deux couches (44, 46, 48, 50, 52) du même matériau, présentant des propriétés de dureté différentes.

21. Insert selon l'une quelconque des revendications précédentes, dans lequel l'insert (10) est construit intégralement d'une seule pièce.

22. Insert selon l'une quelconque des revendications précédentes, dans lequel l'insert comprend deux ou plusieurs éléments élastiques (42) destinés à un engagement mutuel par chevauchement.

23. Insert selon l'une quelconque des revendications précédentes, dans lequel lesdites parties à chevauchement (14) sont destinées à établir un chevauchement d'au moins 10 degrés.

24. Insert selon la revendication 23, dans lequel lesdites parties à chevauchement (14) sont destinées à établir un chevauchement de 360 degrés ou moins.

25. Insert selon la revendication 23, dans lequel lesdites parties à chevauchement (14) sont destinées à établir un chevauchement de 900 degrés ou moins.

26. Insert selon l'une quelconque des revendications précédentes, ayant une forme pratiquement cylindrique.

27. Insert selon l'une quelconque des revendications précédentes, comprenant en outre un moyen d'étanchéité sur les surfaces externe et/ou interne correspondantes (16, 18).

28. Insert selon la revendication 27, dans lequel ledit moyen d'étanchéité comprend un matériau d'étanchéité appliqué sur ladite (lesdites) surface(s) (16, 18) ou au moins un élément d'étanchéité remontant de ladite (desdites) surface(s) (16, 18).

29. Insert selon la revendication 28, dans lequel ledit (lesdits) élément(s) d'étanchéité forme(nt) une seule pièce intégrale avec l'insert (10) ou peut (peuvent) être attaché(s) sur ledit insert (10) ou détaché(s) de celui-ci.

30. Insert selon l'une quelconque des revendications précédentes, dans lequel ledit insert (10) a une rugosité de surface accrue sur au moins une partie de la surface externe et/ou interne (16, 18) pour accroître le coefficient de frottement.

31. Insert selon l'une quelconque des revendications précédentes, dans lequel au moins une paire de moyens d'engagement à verrouillage mutuel (32, 34, 54) est/sont agencée(s) sur les surfaces interne et externe (16, 18) de l'insert (10) en vue d'un verrouillage mutuel desdites parties à chevauchement (14) au cours de la compression ou de la dilatation de l'insert (10).

32. Insert selon la revendication 31, dans lequel lesdits moyens d'engagement à verrouillage mutuel (32, 34) comprennent au moins un agencement à languette et rainure circonférentiel à verrouillage mutuel (54) sur les surfaces interne et externe respectives (16, 18) dudit insert (10).

33. Insert selon l'une quelconque des revendications précédentes, dans lequel ledit insert (10) comprend en outre une bride au niveau d'une extrémité axiale ou des deux extrémités axiales dudit insert (10).
